# EUROPEAN PATENT APPLICATION

(11) **EP 4 502 579 A1**
(43) Date of publication of application: **05.02.2025**
(21) Application number: 23779521.6
(22) Date of filing: 13.03.2023
(51) Int. Cl.: G01N 21/59

(54) **OPTICAL MEASUREMENT DEVICE, OPTICAL MEASUREMENT SYSTEM, AND OPTICAL MEASUREMENT METHOD**

(30) Priority: 30.03.2022 JP 2022057615
(71) Applicant: Yokogawa Electric Corporation, Tokyo 180-8750 (JP)
(72) Inventor: OGAWA Jun-ichi, Musashino-shi, Tokyo 180-8750 (JP)
(74) Representative: Stöckeler, Ferdinand
(86) International application number: PCT/JP2023/009710
(87) International publication number: WO 2023/189501

(57) **Abstract**

An optical measurement apparatus 10 according to the present disclosure includes a first irradiator 11a configured to irradiate, with excitation light L1, a single first irradiation area R1 on a movement path of a moving sample, a second irradiator 11b configured to irradiate, with probe light L2, a second irradiation area R2 that is located on a movement direction side of the sample than the single first irradiation area R1 on the movement path, a detection unit 12b1 configured to detect the probe light L2 with which the second irradiator 11b has irradiated the sample, and a controller 15 configured to calculate an optical parameter at a plurality of time points, based on the detection intensity of the probe light L2 that has been transmitted through the sample at each of the plurality of time points different from each other in a transient response of the optical parameter of the sample due to excitation by the excitation light L1 and has been detected by the detection unit 12b1 at different timings, and calculate a physical property parameter of the sample based on the calculated optical parameter.

## Description

### TECHNICAL FIELD

This application claims priority to Japanese Patent Application No. 2022-057615, filed on March 30, 2022, the entire contents of which are incorporated herein by reference.

### BACKGROUND

The present disclosure relates to an optical measurement apparatus, an optical measurement system, and an optical measurement method.

Technology for measuring physical parameters of samples, including fluids or the like, in a non-contact manner by optical methods has been conventionally known.

For example, Patent Literature (PTL) 1 discloses a transient absorption measurement method and a transient absorption measurement apparatus that enable, with a simple structure, measurement of transient absorption characteristics at a lot of times in a short time, in a wide time region including a time region from 5 nanoseconds to 50 nanoseconds. For example, PTL 2 discloses a temperature measurement apparatus that can measure the temperature of a substance contained in a chemical reaction system in a non-contact manner and with high accuracy, by measuring a lifetime of an excited state.

### CITATION LIST

### Patent Literature

PTL 1: JP 2015-222192 A
PTL 2: JP 2020-046199 A

### SUMMARY

### (Technical Problem)

For example, when a sample is optically excited by irradiation with pulsed light, an optical parameter of the sample exhibits a transient response according to a physical property parameter, including a lifetime of an excited state. Such measurement of the sample with the physical property parameter of the order of microseconds to milliseconds requires a long integration time. This causes problems of the need for the function of stably operating a laser over a long time and deterioration of the sample itself due to the irradiation with the light over a long time or a lapse of time itself.

It would be helpful to provide an optical measurement apparatus, an optical measurement system, and an optical measurement method that can measure, even for a sample with a long-time physical property parameter, the physical property parameter in a short time.

### (Solution to Problem)

An optical measurement apparatus according to some embodiments includes:
a first irradiator configured to irradiate, with excitation light, a single first irradiation area on a movement path of a moving sample;
a second irradiator configured to irradiate, with probe light, a second irradiation area that is located on a movement direction side of the sample than the single first irradiation area on the movement path;
a detection unit configured to detect the probe light with which the second irradiator has irradiated the sample; and
a controller configured to calculate an optical parameter at a plurality of time points, based on the detection intensity of the probe light that has been transmitted through the sample at each of the plurality of time points different from each other in a transient response of the optical parameter of the sample due to excitation by the excitation light and has been detected by the detection unit at different timings, and calculate a physical property parameter of the sample based on the calculated optical parameter.

Therefore, the physical property parameter can be measured in a short time even for the sample with the long-time physical property parameter. The optical measurement apparatus does not need to wait for subsequent irradiation with the excitation light until a change caused by the excitation completely converges and the sample returns to a steady state. The optical measurement apparatus is continuously supplied with the sample that is excited by the excitation light at the first irradiation area, and can continuously measure the optical parameter of the sample by the irradiation of the second irradiation area with the probe light.

In one embodiment, the second irradiation area may include a single area, the detection unit may include a single detector, and when a movement speed of the sample varies, the controller may be configured to calculate the optical parameter for each of a plurality of movement speeds different from each other. Therefore, even when the second irradiation area includes only one area and the first detection unit includes only one detector, the optical measurement apparatus can calculate the optical parameter and the physical property parameter by varying the timing at which the excited sample passes through the second irradiation area.

In one embodiment, the second irradiation area may include a single area, the detection unit may include a plurality of detectors arranged in an array along the movement path, and the controller may be configured to calculate the optical parameter at the plurality of time points, based on the detection intensity detected by the plurality of detectors different from each other.

Therefore, the optical measurement apparatus can calculate the optical parameter and the physical property parameter of the sample, even under a condition in which a sample flow rate is constant in a distribution cell. The optical measurement apparatus can perform the measurement under the stable condition with the constant sample flow rate. The optical measurement apparatus enables the calculation of the physical property parameter even faster than when the sample flow rate is swept. The optical measurement apparatus can improve temporal resolution and acquire a temporal variation of the optical parameter, as a smoother profile. The optical measurement apparatus can reproduce a continuous attenuation profile, as obtained by conventional optical measurement methods, in a discrete but more continuous state.

In one embodiment, the second irradiation area may include a plurality of areas, the detection unit may include a detector corresponding to each of the plurality of areas, and the controller may be configured to calculate the optical parameter at the plurality of time points, based on the detection intensity detected by a plurality of the detectors different from each other.

Therefore, the optical measurement apparatus can calculate the optical parameter and the physical property parameter of the sample, even under a condition in which the sample flow rate is constant in the distribution cell. The optical measurement apparatus can perform the measurement under the stable condition with the constant sample flow rate. The optical measurement apparatus enables the calculation of the physical property parameter even faster than when the sample flow rate is swept.

An optical measurement system according to some embodiments may include the optical measurement apparatus according to any one of above, and a flow-type distribution cell in which the sample flows inside a channel in one direction. Therefore, the optical measurement system can make the sample move in one direction without keeping the sample in the channel that overlaps the first irradiation area and the second irradiation area. Therefore, the optical measurement system can reduce exposure times of the sample in the first irradiation area and the second irradiation area. As a result, the optical measurement system can suppress degradation of the sample to be measured due to light irradiation.

In one embodiment, the optical measurement system may include a control apparatus configured to control the optical measurement apparatus, and a pump configured to vary a flow rate of the sample under the control of the control apparatus. Therefore, the optical measurement system enables, using the optical measurement apparatus, the calculation of the optical parameter and the physical property parameter based on a flow rate sweep. Therefore, the optical measurement system can measure the physical property parameter in a short time even for the sample with the long-time physical property parameter.

In one embodiment, the optical measurement system may include a mask configured to limit the single first irradiation area and the second irradiation area on the distribution cell. This enables the optical measurement system to achieve compatibility between uniformity of light intensity and narrowing of the irradiation areas for the excitation light and the probe light. In addition, the optical measurement system can suppress degradation of the sample to be measure due to light irradiation, as compared to when the excitation light and the probe light are gathered on the local areas and applied to the sample at high energy density.

An optical measurement system according to some embodiments may include the optical measurement apparatus according to any one of above, and a rotating body in which the sample is deposited on a substrate, the rotating body configured to rotate in one direction. Therefore, the optical measurement system can make the sample move in one direction without keeping the sample in the movement path that overlaps the first irradiation area and the second irradiation area. Therefore, the optical measurement system can reduce exposure times of the sample in the first irradiation area and the second irradiation area. As a result, the optical measurement system can suppress degradation of the sample to be measured due to light irradiation.

In one embodiment, the optical measurement system may include a control apparatus configured to control the optical measurement apparatus, and a motor configured to vary a rotational speed of the rotating body under the control of the control apparatus. Therefore, the optical measurement system can calculate, using the optical measurement apparatus, the optical parameter and the physical property parameter based on a sweep of the rotational speed. Therefore, the optical measurement system can measure the physical property parameter in a short time even for the sample with the long-time physical property parameter.

An optical measurement method according to some embodiments includes:
irradiating, in a first irradiation step with excitation light, a single first irradiation area on a movement path of a moving sample;
irradiating, in a second irradiation step with probe light, a second irradiation area that is located on a movement direction side of the sample than the single first irradiation area on the movement path;
detecting, in a detection step, the probe light with which the sample has been irradiated in the second irradiation step;
calculating, in a first calculation step, an optical parameter at a plurality of time points, based on the detection intensity of the probe light that has been transmitted through the sample at each of the plurality of time points different from each other in a transient response of the optical parameter of the sample due to excitation by the excitation light and has been detected at different timings in the detection step; and
calculating, in a second calculation step, a physical property parameter of the sample based on the optical parameter calculated in the first calculation step.

Therefore, the physical property parameter can be measured in a short time even for the sample with the long-time physical property parameter. The optical measurement method does not need to wait for subsequent irradiation with the excitation light until a change caused by the excitation completely converges and the sample returns to a steady state. In the optical measurement method, the sample that is excited by the excitation light at the first irradiation area is continuously supplied, and the optical parameter of the sample can be continuously measured by the irradiation of the second irradiation area with the probe light.

### (Advantageous Effect)

According to the present disclosure, it is possible to provide the optical measurement apparatus, the optical measurement system, and the optical measurement method that can measure the physical property parameter in the short time even for the sample with the long-time physical property parameter.

### BRIEF DESCRIPTION OF THE DRAWINGS

In the accompanying drawings:
FIG. 1 is a schematic diagram illustrating an example of the configuration of an optical measurement system according to a first embodiment of the present disclosure;
FIG. 2 is a functional block diagram illustrating the schematic configuration of the optical measurement system of FIG. 1;
FIG. 3 is a time sequence diagram illustrating an example of timings of light for a sample moving on a movement path;
FIG. 4 is a schematic diagram schematically illustrating energy levels of the sample;
FIG. 5 is a schematic diagram illustrating an example of operations of an optical measurement apparatus of FIG. 1;
FIG. 6 is a flowchart illustrating an example of operations of the optical measurement system of FIG. 1;
FIG. 7 is a schematic diagram illustrating a first variation of the optical measurement system of FIG. 1;
FIG. 8 is a schematic diagram illustrating variations of a distribution cell of a flow system of FIG. 1;
FIG. 9 is a schematic diagram illustrating a part of a second variation of the optical measurement system of FIG. 1;
FIG. 10 is a schematic diagram illustrating a part of a third variation of the optical measurement system of FIG. 1;
FIG. 11 is a schematic diagram illustrating a part of a fourth variation of the optical measurement system of FIG. 1;
FIG. 12 is a schematic diagram illustrating an example of the configuration of a part of an optical measurement system according to a second embodiment of the present disclosure; and
FIG. 13 is a flowchart illustrating an example of operations of the optical measurement system of FIG. 12.

### DETAILED DESCRIPTION

A background and problems of conventional technology will be described in more detail.

In the process of developing electronic materials, upper limits of the performance of devices can be estimated to some degree, before the devices are actually assembled and tested, by measuring lifetimes of excited states, which are one of physical properties of substances as the materials. The longer such a lifetime is, the better the performance as the device tends to be. Therefore, the materials with such long lifetimes are being developed.

When the lifetimes of the materials with the long excited-state lifetimes are measured using optical measurement apparatuses that have been developed to capture high-speed and high-resolution photoexcitation phenomena or electron and mass transfer phenomena, measurement times become longer to obtain the same degree of certainty as measurement of lifetimes of materials with short excited-state lifetimes. Therefore, for measurement of the lifetimes of the materials with the long excited-state lifetimes, a measurement method that can maintain a high degree of certainty in a shorter time is desired.

In a transient absorption measurement method described in PTL 1, not only excitation light but also probe light is pulsed light, which reduces the effect of irreversible destruction on a sample and essentially increases light intensity. In addition, the transient absorption measurement method makes full use of a delay time, which contributes to a certain extent to shortening a measurement time. However, the problem of long measurement times for measurement of the lifetimes of the materials with the long excited-state lifetimes still remains. In addition, the use of a pulsed light source makes a measurement system inherently expensive.

A temperature measurement apparatus described in PTL 2 calculates the temperature of a reaction field by optically exciting a substance in a distribution system and acquiring an attenuation characteristic of absorbance of probe light. In such an apparatus, since an irradiation area with excitation light and an irradiation area with the probe light overlap each other, an area for excitation and an area for observing a change due to the excitation using the probe light cannot be separated from each other. Therefore, when the apparatus is applied to measurement of a lifetime of a material with a long excited-state lifetime, the next integration by irradiation with the excitation light cannot be performed, until the change caused by the excitation is completely converged and the material returns to a steady state. As a result, it is difficult to shorten a measurement time. In addition, the use of pulsed light as an excitation light source makes a measurement system expensive.

To solve the above problems, the present disclosure aims at providing an optical measurement apparatus, an optical measurement system, and an optical measurement method that can measure, even for a sample with a long-time physical property parameter, the physical property parameter in a short time. One embodiment of the present disclosure will be mainly described below with reference to the accompanying drawings.

### (First Embodiment)

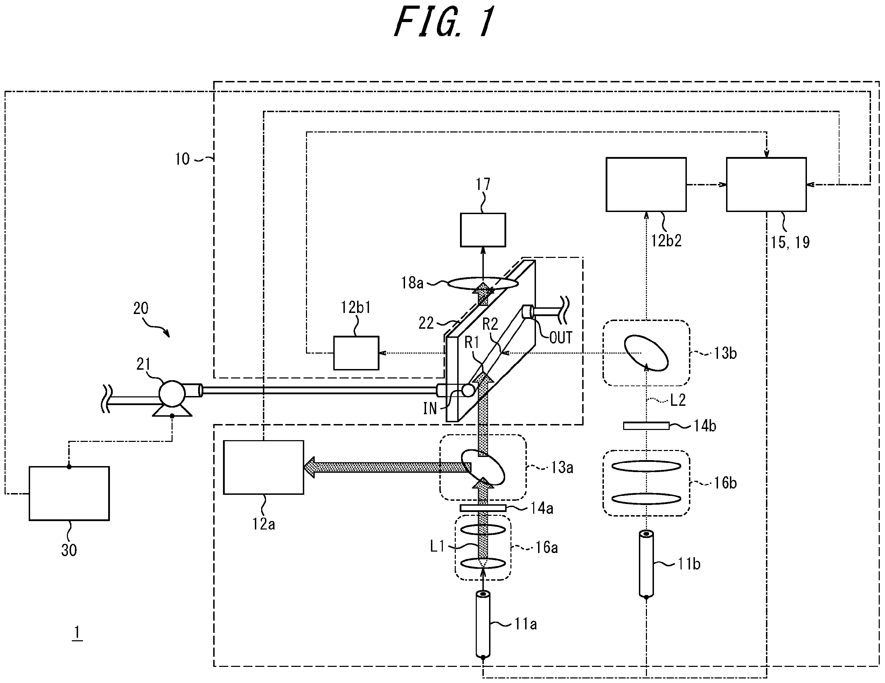

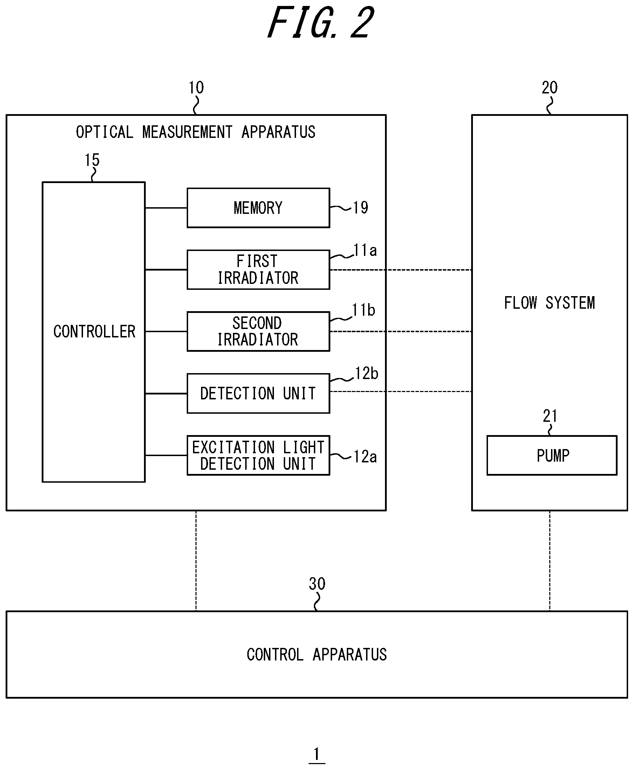

With reference to FIGS. 1 and 2, the configurations and functions of an optical measurement apparatus 10 and an optical measurement system 1 according to a first embodiment will be mainly described.

FIG. 1 is a schematic diagram illustrating an example of the configuration of the optical measurement system 1 according to the first embodiment of the present disclosure. As illustrated in FIG. 1, the optical measurement system 1 has the optical measurement apparatus 10, a flow system 20, and a control apparatus 30.

The optical measurement apparatus 10 is installed with respect to the flow system 20, and measures, based on excitation light L1 and probe light L2, an optical parameter and a physical property parameter of a sample moving on a movement path of the flow system 20.

In the first embodiment, the "sample" to be measured includes, for example, any molecules constituting a solution. A solute in the solution includes, for example, molecules in which electrons transition from a ground state to an excited state due to absorption of the excitation light L1. The solute in the solution includes, for example, molecules having π-electron conjugation and constituting amino acids, peptides, and the like. A solvent in the solution includes any molecules that do not have strong absorption for the excitation light L1 and the probe light L2 in absorption wavelength regions in ground and excited states.

In the present disclosure, the "optical parameter" of the sample includes any parameter related to absorption of light, such as optical density and absorbance, for example. The "physical property parameter" of the sample is a parameter related to optical transitions, such as a lifetime of an excited state, for example, and includes any parameter that can be related to some extent to characteristics of the sample.

The flow system 20 has a pump 21. The pump 21 includes any pump with low pulsation. For example, the pump 21 includes a syringe pump. The syringe pump is useful when the amount of the sample is small and a measurement time is short. In addition, the pump 21 may also include a diaphragm pump. Not limited to these, the pump 21 may include any pump with a damper to suppress pulsation.

The flow system 20 has a flow-type distribution cell 22 in which the sample flows in one direction inside a channel by means of the pump 21. In the flow system 20, the sample moves on the movement path due to pressure from the pump 21. The sample is continuously supplied to the distribution cell 22 by the pump 21. The pump 21 varies a sample flow rate under the control of the control apparatus 30.

The movement path of the sample is formed with a channel located between the pump 21 and the distribution cell 22, the distribution cell 22, and a channel extending further from an outlet OUT of the distribution cell 22. In FIG. 1, the sample moves from the pump 21 side toward the right side of the drawing, passes inside the distribution cell 22 from an inlet IN of the distribution cell 22, and is discharged from the outlet OUT of the distribution cell 22 to the further extending channel.

FIG. 2 is a functional block diagram illustrating the schematic configuration of the optical measurement system 1 of FIG. 1. In FIG. 2, among the configurations illustrated in FIG. 1, only the main configurations of the optical measurement apparatus 10 and the flow system 20, which are subject to control, are illustrated. As illustrated in FIG. 2, the optical measurement apparatus 10 has a first irradiator 11a, a second irradiator 11b, an excitation light detection unit 12a, a detection unit 12b, a controller 15, and a memory 19.

The first irradiator 11a includes any light source, such as a semiconductor laser, for example. The first irradiator 11a irradiates a single first irradiation area R1, which is on the movement path of the sample moving in the flow system 20, with the excitation light L1 via any optical system included in the optical measurement apparatus 10. More specifically, the first irradiator 11a irradiates the single first irradiation area R1, which is located on the inlet IN side of the distribution cell 22 included in the flow system 20, with the excitation light L1 as continuous light. The first irradiator 11a applies the excitation light L1 to excite the sample when the sample passes through a channel of the distribution cell 22 that overlaps the first irradiation area R1. The wavelength of the excitation light L1 applied by the first irradiator 11a is included in a first wavelength region. The first wavelength region includes any wavelength region, such as, for example, the ultraviolet region and the visible region.

The second irradiator 11b includes any light source, such as a semiconductor laser, for example. The second irradiator 11b irradiates a second irradiation area R2, which is located on a movement direction side of the sample than the single first irradiation area R1 on the movement path in the flow system 20, with the probe light L2 via any optical system included in the optical measurement apparatus 10. More specifically, the second irradiator 11b irradiates the single second irradiation area R2, which is located on the outlet OUT side than the first irradiation area R1 on the channel of the distribution cell 22 included in the flow system 20, with the probe light L2 as continuous light. The second irradiator 11b applies and transmits the probe light L2 through the sample when the sample passes through the channel of the distribution cell 22 that overlaps the second irradiation area R2. The wavelength of the probe light L2 applied by the second irradiator 11b is included in a second wavelength region. The second wavelength region includes, for example, any wavelength region such as the visible region and the infrared region.

The detection unit 12b has a first detection unit 12b1 and a second detection unit 12b2. Each of the first detection unit 12b1 and the second detection unit 12b2 includes any photodetector, such as a photodiode, for example.

The first detection unit 12b1 detects the probe light L2 with which the second irradiator 11b has irradiated the sample. The first detection unit 12b 1 detects the probe light L2 that has been applied by the second irradiator 11b and has been transmitted through the sample moving along the movement path on the distribution cell 22 in the flow system 20.

The second detection unit 12b2 detects a part of the probe light L2 that has been emitted from the second irradiator 11b and before being applied to the sample. The second detection unit 12b2 is disposed to observe a temporal variation, e.g., a drift, of the intensity of the probe light L2 emitted from the second irradiator 11b.

The excitation light detection unit 12a includes any photodetector, such as a photodiode, for example. The excitation light detection unit 12a detects a part of the excitation light L1 that has been emitted from the first irradiator 11a and before being applied to the sample. The excitation light detection unit 12a is disposed to observe a temporal variation, e.g., a drift, of the intensity of the excitation light L1 emitted from the first irradiator 11a.

The memory 19 includes any storage device such as Hard Disk Drive (HDD), Solid State Drive (SSD), Electrically Erasable Programmable Read-Only Memory (EEPROM), Read-Only Memory (ROM), and Random Access Memory (RAM). The memory 19 stores information necessary to realize operations of the optical measurement apparatus 10. The memory 19 stores, for example, detection information from the first detection unit 12b 1 and information regarding a movement speed of the sample. In the present disclosure, the "detection information from the first detection unit 12b1" includes, for example, the detection intensity of the probe light L2 detected by the first detection unit 12b 1. In the first embodiment, the "information regarding the movement speed" includes, for example, the sample flow rate. In addition to these, the memory 19 may store, as information, the optical parameter and the physical property parameter calculated by the controller 15, for example.

The memory 19 may function as a main memory, auxiliary memory, or cache memory. The memory 19 is not limited to those built into the optical measurement apparatus 10, but may be an external storage device connected through a digital input/output port, such as USB.

The controller 15 includes one or more processors. The controller 15 includes the processors that enable processing related to the optical measurement apparatus 10. The controller 15 is connected to each component constituting the optical measurement apparatus 10, and controls and manages each component and the optical measurement apparatus 10 on the whole.

The control apparatus 30 includes any apparatus that controls the optical measurement apparatus 10 and the flow system 20. The control apparatus 30 is connected to the controller 15 of the optical measurement apparatus 10 and the pump 21 of the flow system 20, and controls and manages these components in the optical measurement system 1.

The configurations and functions of the optical systems, as illustrated in FIG. 1, which constitute the optical measurement apparatus 10, will be primarily described.

The excitation light L1 emitted from the first irradiator 11a passes through a first beam adjuster 16a, which is constituted of any optical elements such as lenses, and a first shutter 14a, and is incident on a first beam splitter 13a. The excitation light L1 splits at the first beam splitter 13a. A part of the excitation light L1 passes through the first beam splitter 13a and is applied to the first irradiation area R1. A part of the remaining excitation light L1 is reflected by the first beam splitter 13a and is detected by the excitation light detection unit 12a.

The excitation light L1 applied to the first irradiation area R1 is adjusted by the first beam adjuster 16a so as to have a predetermined beam diameter, i.e., the diameter of the first irradiation area R1 on the channel of the distribution cell 22. The beam diameter of the excitation light L1 applied to the first irradiation area R1 is adjusted to a value that is larger than the beam diameter of the probe light L2 and that does not overlap the second irradiation area R2.

The excitation light L1 is incident on the first irradiation area R1 on the inlet IN side of the distribution cell 22, e.g., on the channel immediately after the sample flows in from the inlet IN. The excitation light L1 transmitted through the channel of the distribution cell 22 is gathered by a focusing lens 18a and absorbed by a laser dump 17. This suppresses unnecessary scattering and reflection of the excitation light L1.

The probe light L2 emitted from the second irradiator 11b passes through a second beam adjuster 16b, which is constituted of any optical elements such as lenses, and a second shutter 14b, and is incident on a second beam splitter 13b. The probe light L2 splits at the second beam splitter 13b. A part of the probe light L2 is reflected by the second beam splitter 13b and is applied to the second irradiation area R2. A part of the remaining probe light L2 passes through the second beam splitter 13b and is detected by the second detection unit 12b2.

The probe light L2 applied to the second irradiation area R2 is adjusted by the second beam adjuster 16b so as to have a predetermined beam diameter, i.e., the diameter of the second irradiation area R2 on the channel of the distribution cell 22. The beam diameter of the probe light L2 applied to the second irradiation area R2 is adjusted to a value that is smaller than the beam diameter of the excitation light L1.

The probe light L2 is incident on the second irradiation area R2, which is located on the outlet OUT side of the first irradiation area R1 and separate from the first irradiation area R1 at a predetermined distance in the distribution cell 22. The probe light L2 transmitted through the channel of the distribution cell 22 is detected by the first detection unit 12b1.

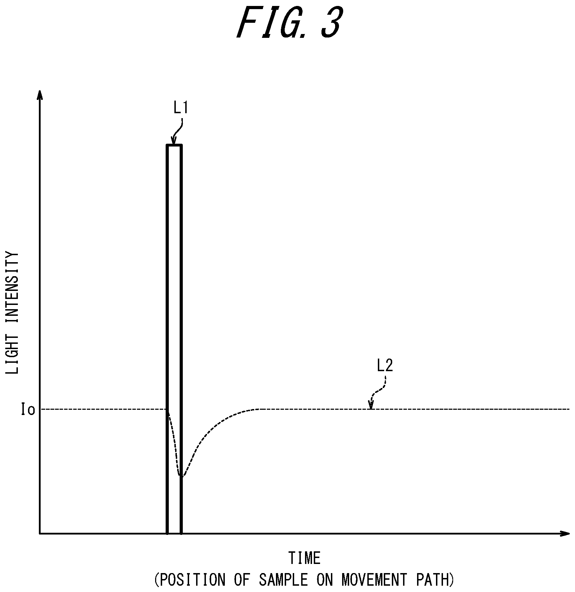

FIG. 3 is a time sequence diagram illustrating an example of timings of the light for the sample moving on the movement path. The vertical axis of FIG. 3 indicates the light intensity of each of the excitation light L1 and the probe light L2. The horizontal axis of FIG. 3 indicates time.

A variation of the light intensity of the excitation light L1 in FIG. 3 indicates a specific timing at which the excitation light L1, as the continuous light, is applied to a specific sample group moving in one direction on the movement path in the flow system 20. The light intensity of the excitation light L1 in FIG. 3 indicates excitation light intensity immediately before the excitation light L1 is applied to that sample group. A variation of the light intensity of the probe light L2 in FIG. 3 indicates a timing at which the probe light L2 attenuates in response to the irradiation timing of the excitation light L1, assuming that the probe light L2 is always applied to the sample group. The light intensity of the probe light L2 in FIG. 3 indicates transmitted light intensity, i.e., detection intensity, when the probe light L2 passes through the sample group and is detected by the first detection unit 12b1.

The controller 15 controls the first irradiator 11a to apply the excitation light L1 as the continuous light. Similarly, the controller 15 controls the second irradiator 11b to apply the probe light L2 as the continuous light. The specific sample group moving in the one direction on the movement path in the flow system 20 is exposed to the excitation light L1 only when being located at a portion overlapping the first irradiation area R1 in the movement path.

The optical density of the specific sample group flowing through the channel of the distribution cell 22 varies by being exposed to the excitation light L1 as the continuous light at the specific timing. For example, the optical density of the specific sample group flowing through the channel of the distribution cell 22 increases due to excitation of the sample group by the excitation light L1. At this time, the transmitted light intensity of the probe light L2 decreases.

When the specific sample group moves away from the first irradiation area R1 of the excitation light L1 as the continuous light, irradiation of the specific sample group with the excitation light L1 is terminated. At this time, the optical density of the specific sample group flowing through the channel of the distribution cell 22 decreases according to an exponential function whose time constant is a lifetime of an excited state of the sample group excited by the excitation light L1, and recovers to a value before the sample group is exposed to the excitation light L1. The transmitted light intensity of the probe light L2 increases according to an exponential function whose time constant is the lifetime of the excited state and recovers to a baseline value I₀ before the sample group is exposed to the excitation light L1.

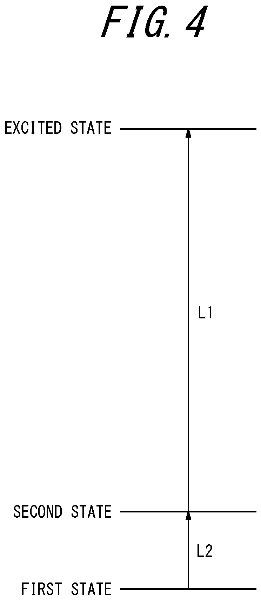

FIG. 4 is a schematic diagram schematically illustrating energy levels of the sample. In general, the energy level structure of the sample flowing through the channel of the distribution cell 22 has a complex structure that includes electronic, vibrational, and rotational levels. However, in FIG. 4, only three representative levels are illustrated for simplicity of explanation. With reference to FIG. 4, the principle on which the variation of the transmitted light intensity of the probe light L2 as illustrated in FIG. 3 can be obtained based on the excitation light L1 will be mainly described.

The wavelength of the probe light L2 is adjusted, for example, to approximately coincide with an absorption wavelength of energy transition between a first state and a second state in FIG. 4. The wavelength of the excitation light L1 is adjusted, for example, to approximately coincide with an absorption wavelength of energy transition between the second state and the excited state in FIG. 4. When the excitation light L1 is absorbed, a part of the population in the second state transitions to the excited state. As a result, the difference between the population in the second state and the population in the first state increases, and the optical density of the substance in the energy transition between the first state and the second state increases. Therefore, the transmitted light intensity of the probe light L2 decreases.

The population in the excited state is energetically unstable and have a tendency to try to return to the ground state. When the irradiation with the excitation light L1 is terminated in such a state, the population in the excited state relaxes to the second state with a predetermined lifetime. As the population in the excited state relaxes to the second state in the predetermined lifetime, the population in the second state recovers to a value before the irradiation with the excitation light L1. Thus, the difference between the population in the second state and the population in the first state becomes smaller according to the predetermined lifetime. Therefore, the optical density of the sample in the energy transition between the first state and the second state decreases with the predetermined lifetime. As a result, the transmitted light intensity of the probe light L2 increases according to the predetermined lifetime and recovers to a value before the irradiation with the excitation light L1.

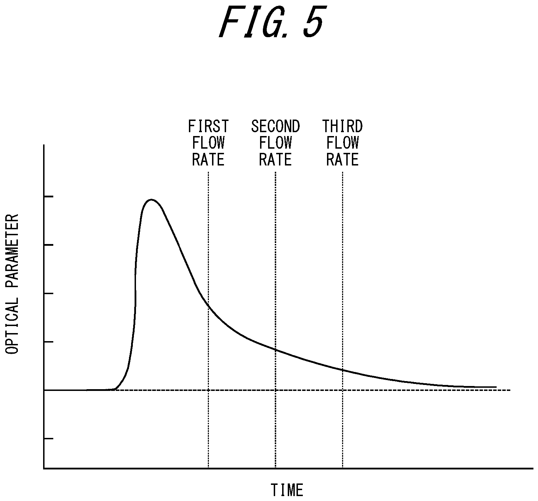

FIG. 5 is a schematic diagram illustrating an example of the operations of the optical measurement apparatus 10 of FIG. 1. The graph of FIG. 5 illustrates a temporal variation of the optical parameter of the sample corresponding to the temporal variation of the transmitted light intensity of the probe light L2 illustrated in the graph of FIG. 3. The optical parameter indicated on the vertical axis of FIG. 5 is the optical density, as an example.

The controller 15 acquires the detection intensity of the probe light L2 that has been transmitted through the sample at each of a plurality of time points different from each other in a transient response of the optical parameter of the sample due to the excitation by the excitation light L1 and has been detected by the first detection unit 12b1 at different timings. The controller 15 calculates the optical parameter at the above plurality of time points based on the acquired detection intensity.

The control apparatus 30 of the optical measurement system 1 controls the pump 21 of the flow system 20 to vary the sample flow rate in the channel of the distribution cell 22. In the optical measurement system 1, as illustrated in FIG. 1, the second irradiation area R2 includes a single area and is separate from the first irradiation area R1 at the predetermined distance on the movement direction side of the sample. In the optical measurement system 1, as illustrated in FIG. 1, the first detection unit 12b1 includes a single detector.

At this time, when the sample flow rate varies in the distribution cell 22 and the movement speed of the sample varies, the controller 15 calculates the optical parameter for each of a plurality of movement speeds different from each other. As illustrated in FIG. 5, for example, the controller 15 calculates the optical parameter for each of first, second, and third flow rates.

The first irradiation area R1 and the second irradiation area R2 are separate from each other at a constant distance along the movement path. When the flow rate of the sample flowing inside the channel of the distribution cell 22 varies under such a condition, the probe light L2 is transmitted through the sample whose time point in the transient response of the optical parameter due to the excitation by the excitation light L1 has changed. The sample with a high flow rate and a fast movement speed is exposed to the probe light L2 based on the optical parameter at an earlier time point in the transient response, because a movement time from the first irradiation area R1 to the second irradiation area R2 is short. The sample with a low flow rate and a slow movement speed is exposed to the probe light L2 based on the optical parameter at a later time point in the transient response, because the movement time from the first irradiation area R1 to the second irradiation area R2 is long.

At the first flow rate, which is the highest of the first, second, and third flow rates, the controller 15 can acquire information on the optical parameter at the earliest time point from a time point at which the optical parameter rises up due to the excitation by the excitation light L1, based on the detection intensity of the probe light L2 transmitted through the sample. At the second flow rate, which is the second highest of the first, second, and third flow rates, the controller 15 can acquire information on the optical parameter at the second earliest time point from the time point at which the optical parameter rises up due to the excitation by the excitation light L1, based on the detection intensity of the probe light L2 transmitted through the sample. At the third flow rate, which is the lowest of the first, second, and third flow rates, the controller 15 can acquire information on the optical parameter at the latest time point from the time point at which the optical parameter rises up due to the excitation by the excitation light L1, based on the detection intensity of the probe light L2 transmitted through the sample.

The controller 15 calculates the optical parameter at each time point, based on the detection intensity of the probe light L2 that has passes through the sample at each flow rate and has been detected by the first detection unit 12b1 at the different timings. In FIG. 5, the controller 15 calculates the optical parameter for each of the three flow rates, and hence acquires three values of the optical parameter in total.

The controller 15 calculates the physical property parameter of the sample based on the calculated optical parameter. For example, the controller 15 performs a fitting process using an exponential function, for the three points indicating the temporal variation of the optical parameter. The controller 15 thereby calculates the lifetime of the excited state of the sample, as the physical property parameter.

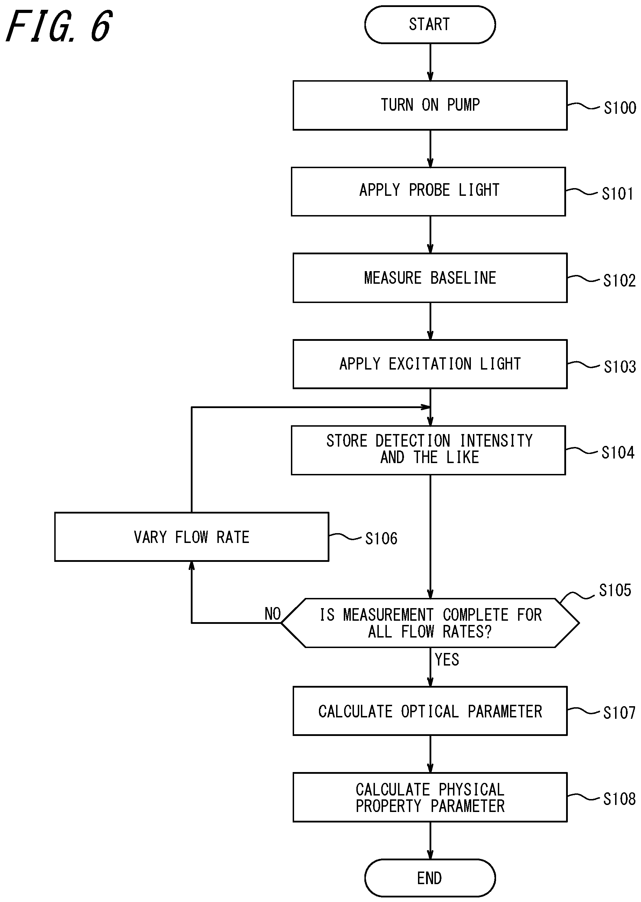

FIG. 6 is a flowchart illustrating an example of the operations of the optical measurement system 1 of FIG. 1. With reference to FIG. 6, a main flow of an optical measurement method using the optical measurement system 1 including the optical measurement apparatus 10 will be described.

In step S100, the control apparatus 30 of the optical measurement system 1 operates the pump 21 of the flow system 20. The control apparatus 30 thereby causes a continuous supply of the solution, in which the sample to be measured is uniformly present, to the distribution cell 22 to start.

In step S101, after the operation of the pump 21 is stabilized in step S100, the controller 15 of the optical measurement apparatus 10 operates the second irradiator 11b to start irradiating the sample with the probe light L2. Step S101 corresponds to a second irradiation step in which the second irradiation area R2, which is located on the movement direction side of the sample than the single first irradiation area R1 on the movement path, is irradiated with the probe light L2. The probe light L2 is continuously applied to the sample, as the continuous light, in subsequent steps.

In step S102, the controller 15 of the optical measurement apparatus 10 measures the transmitted light intensity of the probe light L2 that has been transmitted through the sample in the absence of the excitation light L1 and has been detected by the first detection unit 12b1, as the baseline I₀ as illustrated in FIG. 3. The controller 15 stores information on the measured baseline I₀ in the memory 19.

In step S103, the controller 15 of the optical measurement apparatus 10 operates the first irradiator 11a to start irradiating the sample with the excitation light L1. Step S103 corresponds to a first irradiation step in which the single first irradiation area R1 on the movement path of the moving sample is irradiated with the excitation light L1. The irradiation with the excitation light L1 excites the sample to be measured.

In step S104, the controller 15 of the optical measurement apparatus 10 detects, by the first detection unit 12b1, the probe light L2 that has been transmitted through the sample excited in step S103, and stores the detection intensity of the detected probe light L2 in the memory 19. In addition to such transmitted light intensity of the probe light L2, the controller 15 stores, in the memory 19, additional information such as the sample flow rate in the distribution cell 22 and a measurement time. The memory 19 stores the sample flow rate in the distribution cell 22, as the information regarding the movement speed. Step S104 corresponds to a detection step in which the probe light L2 that has been applied to the sample in the second irradiation step is detected.

In step S105, the controller 15 of the optical measurement apparatus 10 determines whether the measurement is complete for all the flow rates. When it is determined that the measurement is complete for all the flow rates, the controller 15 performs the process of step S107. When it is determined that the measurement is not complete for all the flow rates, the controller 15 performs the process of step S106.

In step S106, the control apparatus 30 of the optical measurement system 1 varies the sample flow rate in the distribution cell 22 by controlling the pump 21 of the flow system 20. For example, the control apparatus 30 sets the flow rate to a low value when the measurement starts, and gradually increases the flow rate as the flow in FIG. 6 is repeated. The sweep of the flow rate from the lowest value to the highest value is performed only once.

While the flow rate is varied in step S106, the controller 15 of the optical measurement apparatus 10 continues to perform the process of storing, in the memory 19, the information on the transmitted light intensity, the flow rate, the measurement time, and the like in step S104.

In step S107, the controller 15 of the optical measurement apparatus 10 acquires a two-dimensional plot of the optical density calculated from the transmitted light intensity versus time, using the measurement data stored in the memory 19 and the distance along the movement path on the distribution cell 22 between the first irradiation area R1 and the second irradiation area R2. Step S107 corresponds to a first calculation step in which the optical parameter at the plurality of time points is calculated based on the detection intensity of the probe light L2 that has been transmitted through the sample at each of the plurality of time points different from each other in the transient response of the optical parameter of the sample due to the excitation by the excitation light L1 and has been detected at the different timings in the detection step.

In step S108, the controller 15 of the optical measurement apparatus 10 acquires, as the physical property parameter, the time constant that is the lifetime of the excited state, by fitting an optimal function to the two-dimensional plot acquired in step S107. The optimal function includes, for example, the exponential function. Step S108 corresponds to a second calculation step in which the physical property parameter of the sample is calculated based on the optical parameter calculated in the first calculation step.

The controller 15 of the optical measurement apparatus 10 outputs the physical property parameter acquired in step S108, as necessary. For example, the controller 15 may output the physical property parameter as information to a user from an output interface, including a display, a speaker, and the like, that is additionally provided in the optical measurement apparatus 10. For example, the controller 15 may output the physical property parameter as the information to the user from an output interface, including a display, a speaker, and the like, that is additionally provided in the optical measurement system 1 as another component different from the optical measurement apparatus 10.

In the optical measurement apparatus 10, the optical measurement system 1, and the optical measurement method according to the one embodiment as described above, the physical property parameter can be measured in a short time even for the sample with the long-time physical property parameter. The controller 15 calculates the optical parameter at the plurality of time points based on the detection intensity of the probe light L2 that has been transmitted through the sample at each of the plurality of time points different from each other in the transient response of the optical parameter of the sample due to the excitation by the excitation light L1 and has been detected by the first detection unit 12b1 at the different timings. Therefore, the optical measurement apparatus 10 does not need to wait for subsequent irradiation with the excitation light L1 until the change caused by the excitation completely converges and the sample returns to a steady state. The optical measurement apparatus 10 is continuously supplied with the sample that is excited by the excitation light L1 at the first irradiation area R1, and can continuously measure the optical parameter of the sample by the irradiation of the second irradiation area R2 with the probe light L2.

The optical measurement apparatus 10 can perform the measurement of the physical property parameter of the sample with the long-time physical property parameter with the same degree of certainty as the measurement of the physical property parameter of a sample with a short-time physical property parameter, and in a shorter time than conventional technology. The optical measurement apparatus 10 can provide the optical measurement method with a high degree of certainty.

In addition, the optical measurement apparatus 10 can use both the excitation light L1 and the probe light L2 as the continuous light. Therefore, the optical measurement apparatus 10 does not need to use expensive light sources, such as pulsed lasers, for the first irradiator 11a and the second irradiator 11b, and can be configured more inexpensively.

The controller 15 calculates the optical parameter for each of the plurality of movement speeds different from each other when the movement speed of the sample varies. Therefore, the optical measurement apparatus 10 can calculate the optical parameter and the physical property parameter, by changing the timing at which the excited sample passes through the second irradiation area R2, even when the second irradiation area R2 includes only one area and the first detection unit 12b1 includes only one detector.

As a result of employing such a flow rate sweep, the optical measurement apparatus 10 can measure a variation of the optical parameter from an initial process to a final process in the transient response with high sensitivity, using the excitation light L1 and the probe light L2 whose irradiation positions are fixed. The optical measurement apparatus 10 does not need to repeat such a flow rate sweep, but can complete the measurement of the optical parameter and the physical property parameter with only one sweep. This allows the optical measurement apparatus 10 to measure the physical property parameter in a short time, even for the sample with the long-time physical property parameter.

Since the optical measurement system 1 has the flow-type distribution cell 22 in which the sample flows in the one direction inside the channel, the optical measurement system 1 can make the sample move in the one direction without keeping the sample in the channel that overlaps the first irradiation area R1 and the second irradiation area R2. This enables the optical measurement system 1 to reduce exposure times of the sample in the first irradiation area R1 and the second irradiation area R2. Therefore, the optical measurement system 1 can suppress degradation of the sample to be measured due to light irradiation.

The optical measurement system 1 has the control apparatus 30 and the pump 21 that varies the sample flow rate under the control of the control apparatus 30, and therefore enables, using the optical measurement apparatus 10, calculation of the optical parameter and the physical property parameter based on the above flow rate sweep. This allows the optical measurement system 1 to measure the physical property parameter in a short time even for the sample with the long-time physical property parameter.

The beam diameter of the probe light L2 applied to the second irradiation area R2 is smaller than the beam diameter of the excitation light L1 applied to the first irradiation area R1, and hence is smaller with respect to the area in which the sample excited by the excitation light L1 is present on the channel of the distribution cell 22. Therefore, it is also possible to irradiate the sample excited by the excitation light L1 with the entire probe light L2. As a result, it is possible to maximize the proportion of the probe light L2 absorbed by the sample.

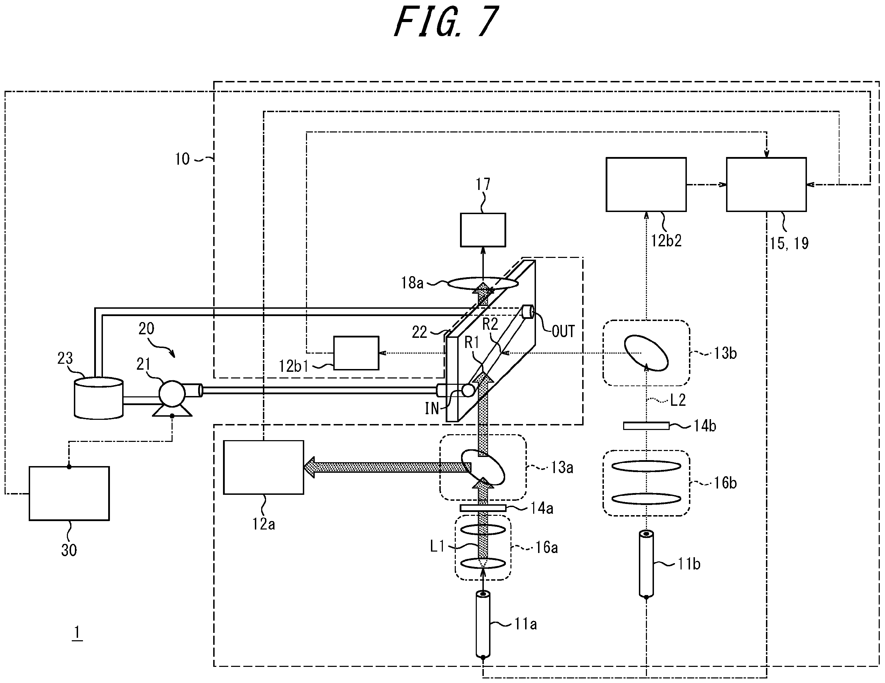

FIG. 7 is a schematic diagram illustrating a first variation of the optical measurement system 1 of FIG. 1. In the above first embodiment, the sample is described as passing through the distribution cell 22 only once by flowing in from the inlet IN of the distribution cell 22 and discharging from the outlet OUT, but is not limited to this. The flow system 20 of the optical measurement system 1 may further have a material tank 23 and a loop system including the material tank 23. This allows the sample to be discharged from the outlet OUT of the distribution cell 22, to return again to the raw material tank 23, and to repeat movement within the loop system.

At this time, the optical measurement apparatus 10 can repeatedly measure the sample that has been irradiated once with the excitation light L1 and the probe light L2 and has headed for discharge. A time interval between the sample being excited once by the excitation light L1 in the first irradiation area R1 and being excited again must be sufficiently longer than the lifetime of the excited state as the physical property parameter.

According to the configuration with such a loop system, the optical measurement system 1 can improve the reusability of the sample. The optical measurement system 1 can be used repeatedly for the measurement without completely discharging the sample, in the case of a reversible reaction, for example, when electrons relax from the excited state back to the ground state, no change is observed in the structure of target molecules in the sample.

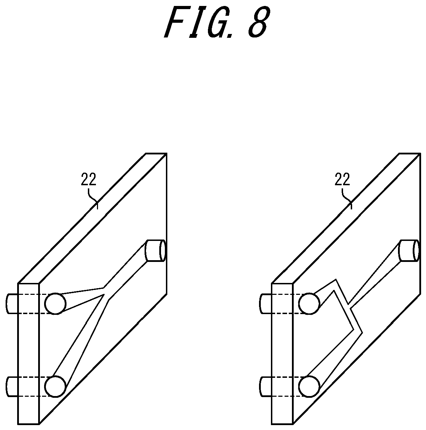

FIG. 8 is a schematic diagram illustrating variations of the distribution cell 22 of the flow system 20 of FIG. 1. In the first embodiment above, the channel of the distribution cell 22 is formed in a straight line from the inlet IN to the outlet OUT as illustrated in FIG. 1, but is not limited to this.

The distribution cell 22 may be formed in the shape of the letter Y, as illustrated on the left side of FIG. 8. The distribution cell 22 may be formed in such a shape that two channels are each bent at a right angle and then merged into one channel, as illustrated on the right side of FIG. 8.

At this time, the flow system 20 may include any chemical reaction system. The chemical reaction system may include, for example, a flow-type chemical reaction system in which the sample flows inside the channel. More specifically, the chemical reaction system may include a synthetic reaction system in which first and second raw materials are synthesized to yield a product.

Each of the first and second raw materials in the chemical reaction system may contain any compound. Each of the first and second raw materials may contain, for example, amino acids. Similarly, the product in the chemical reaction system may include any compound, such as a polymer or oligomer. The product may include, for example, a compound formed by amide bonds, or a compound formed by peptide bonds based on multiple amino acids.

The chemical reaction system may have a first pump 21 pumping the first raw material at a predetermined flow rate and a second pump 21 pumping the second raw material at a predetermined flow rate. The distribution cell 22 of the chemical reaction system may synthesize the first and second raw materials pumped by the two pumps 21. The first and second raw materials pumped by the two pumps 21 may flow inside independent channels, and then be synthesized in a channel inside the distribution cell 22 and discharged from the single channel. The tube diameter of each channel constituting the chemical reaction system may have a value ranging from a few tens of micrometers to a few millimeters, for example. Not limited to this, the tube diameter of each channel constituting the chemical reaction system may have a larger value, for example, a few centimeters or the like.

The channels of the distribution cell 22 may be formed in any shape other than the shape illustrated in FIG. 8. For example, the channels of the distribution cell 22 may be formed in such a shape that three or more independent channels are combined into one.

The optical measurement system 1 also enables the measurement of the physical property parameter for the product and an intermediate generated in the chemical reaction by mixing the first and second raw materials in the distribution cell 22, because the flow system 20 includes the synthetic reaction system. The optical measurement system 1 can also measure the physical property of a reactant, such as the intermediate with a short lifetime of the excited state as the physical property parameter.

The flow system 20 is not limited to the synthetic reaction system described above, but can be a simple mixing system in which no chemical reaction occurs between different raw materials, only mere mixing. This allows the optical measurement system 1 to contribute to the investigation of a phenomenon that occurs during mixing between the different raw materials.

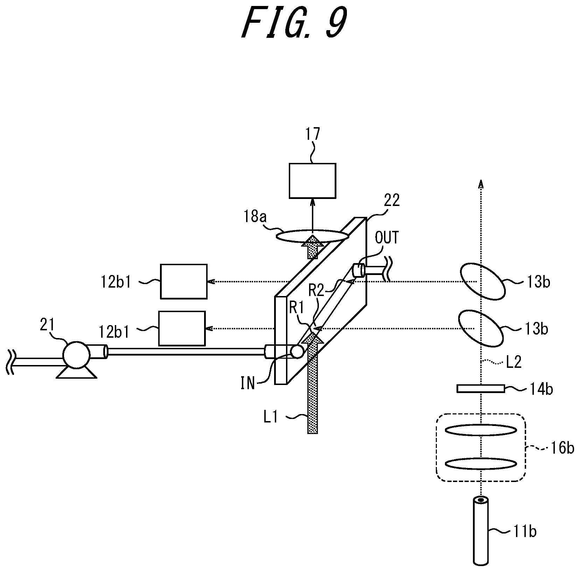

FIG. 9 is a schematic diagram illustrating a part of a second variation of the optical measurement system 1 of FIG. 1. In the first embodiment above, the second irradiation area R2 is described as including the single area, the first detection unit 12b1 is described as including the single detector, and the controller 15 is described as calculating the optical parameter of the sample for each of the plurality of movement speeds different from each other, but are not limited to these.

The second irradiation area R2 may include a plurality of areas. For example, the second irradiation area R2 may include two areas different from each other. The first detection unit 12b1 may include a detector that corresponds to each of the plurality of areas. For example, the first detection unit 12b1 may include two detectors that are different from each other. At this time, the controller 15 may calculate, based on the detection intensity of the probe light L2 detected by the plurality of detectors different from each other, the optical parameter of the sample at the plurality of time points different from each other in the transient response of the optical parameter of the sample.

When the sample excited by the excitation light L1 passes through the two second irradiation areas R2, time points in the transient response of the optical parameter are different between the areas. In the second irradiation area R2 located on the inlet IN side, information on the optical parameter at an earlier time point in the transient response is obtained. In the second irradiation area R2 located on the outlet OUT side, information on the optical parameter at a later time point in the transient response is obtained. The optical measurement apparatus 10 simultaneously calculates, using two beams of the probe light L2, the optical parameter of the sample immediately after the excitation and the sample that has partially relaxed after a lapse of a certain time, and simultaneously quantifies the existence ratio based on the optical parameter.

As described above, the optical measurement apparatus 10 can calculate the optical parameter and the physical property parameter of the sample, even under a condition in which the sample flow rate is constant in the distribution cell 22. The optical measurement apparatus 10 can perform the measurement under the stable condition with the constant sample flow rate. The optical measurement apparatus 10 enables the calculation of the physical property parameter even faster than when the sample flow rate is swept.

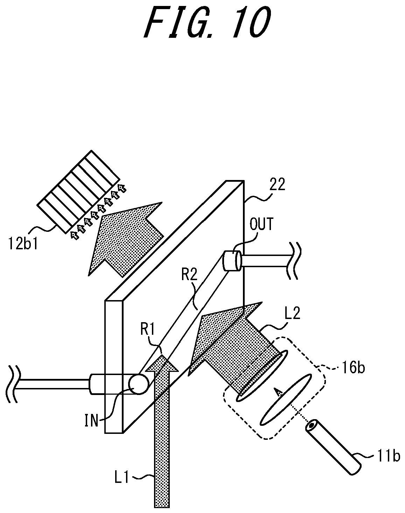

FIG. 10 is a schematic diagram illustrating a part of a third variation of the optical measurement system 1 of FIG. 1. In the above first embodiment, the second irradiation area R2 is described as including the single area, the first detection unit 12b1 is described as including the single detector, and the controller 15 is described as calculating the optical parameter of the sample for each of the plurality of movement speeds different from each other, but are not limited to these.

The second irradiation area R2 may include a single area, and the first detection unit 12b1 may include a plurality of detectors arranged in an array along the movement path of the sample. For example, the first detection unit 12b1 may be configured such that the plurality of detectors, which are different from each other, are aligned along the movement path. The beam diameter of the probe light L2 may be adjusted by the second beam adjuster 16b so that the probe light L2 irradiates the distribution cell 22 in an overall broad and uniform manner on the outlet OUT side of the first irradiation area R1.

The controller 15 may calculate, based on the detection intensity of the probe light L2 detected by the plurality of detectors different from each other, the optical parameter of the sample at the plurality of different time points in the transient response of the optical parameter of the sample.

When the sample excited by the excitation light L1 passes through the single second irradiation area R2, a time point in the transient response of the optical parameter is different from position to position in the second irradiation area R2. In an area located more on the inlet IN side in the second irradiation area R2, information on the optical parameter at an earlier time point in the transient response is obtained. In an area located more on the outlet OUT side in the second irradiation area R2, information on the optical parameter at a later time point in the transient response is obtained. Thus, the positions of the detectors arranged in the array and the time points in the transient response are associated with each other. The optical measurement apparatus 10 simultaneously calculates a variation of the optical parameter from an initial process to a final process in the transient response, using a single beam of the magnified probe light L2 and the plurality of detectors arranged in the array.

As described above, the optical measurement apparatus 10 can calculate the optical parameter and the physical property parameter of the sample, even under a condition in which the sample flow rate is constant in the distribution cell 22. The optical measurement apparatus 10 can perform the measurement under the stable condition with the constant sample flow rate. The optical measurement apparatus 10 enables the calculation of the temporal variation of the optical parameter and the physical property parameter, even faster than when the sample flow rate is swept. The optical measurement apparatus 10 can improve temporal resolution and acquire the temporal variation of the optical parameter, as a smoother profile. The optical measurement apparatus 10 can reproduce a continuous attenuation profile, as obtained by conventional optical measurement methods, in a more continuous state.

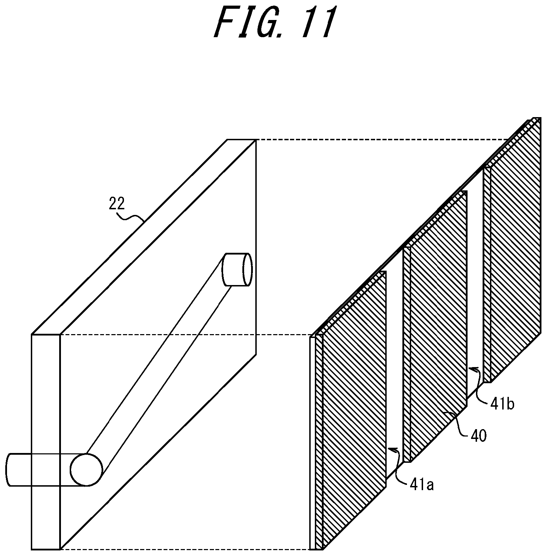

FIG. 11 is a schematic diagram illustrating a part of a fourth variation of the optical measurement system 1 of FIG. 1. In the first embodiment above, the excitation light L1 and the probe light L2 are directly incident on the distribution cell 22 of the flow system 20, but are not limited to this. The optical measurement system 1 may further have a mask 40 that limits the single first irradiation area R1 and the second irradiation area R2 on the distribution cell 22. The mask 40 may have a first slit 41a for the excitation light L1, and a second slit 41b for the probe light L2.

At this time, the beam diameter of the excitation light L1 may be adjusted by the first beam adjuster 16a to be wider than the slit width of the first slit 41a. The beam diameter of the probe light L2 may be adjusted by the second beam adjuster 16b to be wider than the slit width of the second slit 41b.

This enables the optical measurement system 1 to achieve compatibility between uniformity of light intensity and narrowing of the irradiation areas for the excitation light L1 and the probe light L2. In addition, the optical measurement system 1 can suppress degradation of the sample to be measure due to light irradiation, as compared to when the excitation light L1 and the probe light L2 are gathered on the local areas and applied to the sample at high energy density.

The mask 40 may be configured to have only the first slit 41a for the excitation light L1 and not be located on the probe light L2 side. The mask 40 may be spaced apart from the distribution cell 22 as illustrated in FIG. 11, or may be in contact with the distribution cell 22 and positioned directly over the channel of the distribution cell 22. Instead of or in addition to such a mask 40 functioning as apertures, the optical measurement system 1 may further have another aperture located in the middle of an optical path in the optical system of the optical measurement apparatus 10.

In the above first embodiment, the optical measurement apparatus 10 is described as having the first beam splitter 13a and the second beam splitter 13b, but is not limited to this. The optical measurement apparatus 10 may not have at least one of the first beam splitter 13a or the second beam splitter 13b. Although it is desirable to use laser light sources with high directivity in the optical measurement apparatus 10 to obtain a high signal-to-noise ratio, these beam splitters are not necessarily required when light sources with low directivity, such as Light Emitting Diodes (LEDs) are used instead of the laser light sources.

In the above first embodiment, the optical measurement system 1 is described as performing the flow rate sweep from the lowest value to the highest value only once, but is not limited to this. The optical measurement system 1 may repeat such a sweep multiple times. The optical measurement system 1 can improve a signal-to-noise ratio with respect to measurement data on the optical parameter by such an integration process.

In the above first embodiment, the excitation light L1 and the probe light L2 are both described as the continuous light, but are not limited to this. At least one of the excitation light L1 or the probe light L2 may be pulsed light.

In the above first embodiment, the optimal function used for the fitting process in step S108 is described as including the exponential function, but is not limited to this. The optimal function may include any function other than the exponential function.

In the above first embodiment, the optical measurement apparatus 10 may have a fluorescence filter to suppress the effect of fluorescence emitted from the sample. Such a fluorescence filter may be positioned immediately in front of the first detection unit 12b1 on which the probe light L2 is incident. The optical measurement apparatus 10 can thereby further improve the measurement certainty.

In the above first embodiment, at least a part of the processing operations performed by the controller 15 may be performed by the control apparatus 30. For example, instead of the controller 15, the control apparatus 30 may perform the series of processing operations described above related to the controller 15. Conversely, at least a part of the processing operations performed by the control apparatus 30 may be performed by the controller 15.

The optical measurement system 1 according to the first embodiment as described above can be applied as a measurement apparatus for continuous flow synthesis. The optical measurement system 1 can be combined with a continuous flow synthesizer to simultaneously perform synthesis and physical property measurement. The optical measurement system 1 according to the first embodiment as described above can also be applied to continuous monitoring of a physical property of a substance flowing in a pipe in a chemical plant. As described above, the optical measurement method using the optical measurement system 1 can be one of methods of monitoring a physical property within a continuous process in which a substance is continuously produced.

### (Second Embodiment)

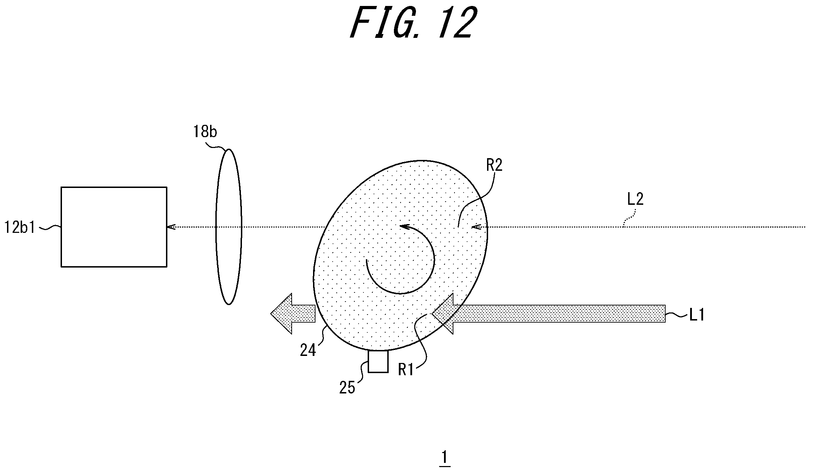

FIG. 12 is a schematic diagram illustrating an example of the configuration of a part of an optical measurement system 1 according to a second embodiment of the present disclosure. With reference to FIG. 12, the configuration and operations of the optical measurement system 1 according to the second embodiment will be mainly described. The optical measurement system 1 according to the second embodiment differs from that according to the first embodiment mainly in the configuration of the flow system 20.

The other configurations, functions, effects, variations, and the like are the same as those of the first embodiment, and the corresponding explanations also apply to the optical measurement system 1 according to the second embodiment. In the following description, the same components as in the first embodiment are denoted by the same reference numerals, and descriptions thereof are omitted. Differences from the first embodiment will be mainly explained.

In the second embodiment, the "sample" to be measured includes, for example, any sample deposited on a substrate. The flow system 20 has a rotating body 24 in which the sample is deposited on the substrate.

The rotating body 24 includes, for example, a solar cell, a photoresponsive device, and the like. The rotating body 24 is produced based on any manufacturing method, including spin coating, vacuum deposition, spray and pyrosol in Chemical Vapor Deposition (CVD), crystal growth, squeegee, and screen printing methods. Additional processing, including soaking, etching, and the like, may be subjected to the rotating body 24. Such additional processing is intended to add an additional function to the substrate produced by the above manufacturing methods.

The flow system 20 has a motor 25 that is attached to the rotating body 24 and is capable of rotating the rotating body 24. The motor 25 rotates the rotating body 24 in one direction under the control of the control apparatus 30. The motor 25 varies a rotational speed of the rotating body 24 under the control of the control apparatus 30. The sample deposited on the substrate thereby rotates in the one direction on the rotating body 24. In the second embodiment, the "information regarding the movement speed" includes the rotational speed of the sample on the rotating body 24, for example.

The controller 15 controls the first irradiator 11a to apply the excitation light L1 as the continuous light. Similarly, the controller 15 controls the second irradiator 11b to apply the probe light L2 as the continuous light. The excitation light L1 and the probe light L2 are applied to the same radial distance from an axial center of rotation. The probe light L2 transmitted through the sample on the rotating body 24 is gathered by the focusing lens 18b, and detected by the first detection unit 12b1.

A specific sample group that moves on the movement path of the flow system 20 while rotating in the one direction is exposed to the excitation light L1 only when being located at the portion overlapping the first irradiation area R1 in the movement path. The movement path of the sample is designed so that a time interval between the sample being excited once by the excitation light L1 in the first irradiation area R1 and being excited again is sufficiently longer than a lifetime of the excited state as the physical property parameter.

The optical density of the specific sample group rotating on the substrate varies by exposure to the excitation light L1 as the continuous light at a particular timing. For example, the optical density of the specific sample group increases by the excitation of the sample group by the excitation light L1. At this time, the transmitted light intensity of the probe light L2 decreases.

When the specific sample group moves away from the first irradiation area R1 of the excitation light L1 as the continuous light, irradiation of the specific sample group with the excitation light L1 is terminated. At this time, the optical density of the specific sample group rotating on the substrate decreases according to an exponential function whose time constant is the lifetime of the excited state of the sample group excited by the excitation light L1, and recovers to a value before the sample group is exposed to the excitation light L1. The transmitted light intensity of the probe light L2 increases according to an exponential function whose time constant is the lifetime of the excited state and recovers to a baseline value I₀ before the sample group is exposed to the excitation light L1.

The control apparatus 30 of the optical measurement system 1 controls the motor 25 of the flow system 20 to vary the rotational speed i.e., movement speed of the sample on the rotating body 24. In the optical measurement system 1, as illustrated in FIG. 12, the second irradiation area R2 includes a single area and is separate from the first irradiation area R1 at a predetermined distance on the rotational direction side of the sample. In the optical measurement system 1, as illustrated in FIG. 12, the first detection unit 12b1 includes a single detector.

At this time, when the rotational speed i.e., movement speed of the sample varies in the rotating body 24, the controller 15 calculates the optical parameter for each of a plurality of movement speeds different from each other. As in FIG. 5 according to the first embodiment, for example, the controller 15 calculates the optical parameter for each of first, second, and third rotational speeds.

The first irradiation area R1 and the second irradiation area R2 are separate from each other at the constant distance along the movement path. When the movement speed of the sample rotating on the rotating body 24 varies under such a condition, the probe light L2 is transmitted through the sample whose time point in the transient response of the optical parameter due to the excitation by the excitation light L1 has changed. The sample with a high rotational speed is exposed to the probe light L2 based on the optical parameter at an earlier time point in the transient response, because a movement time from the first irradiation area R1 to the second irradiation area R2 is short. The sample with a low rotational speed is exposed to the probe light L2 based on the optical parameter at a later time point in the transient response, because the movement time from the first irradiation area R1 to the second irradiation area R2 is long.

At a first rotational speed, which is the fastest of the first, second, and third rotational speeds, the controller 15 can acquire information on the optical parameter at the earliest time point from a time point at which the optical parameter rises up due to the excitation by the excitation light L1, based on the detection intensity of the probe light L2 transmitted through the sample. At the second rotational speed, which is the second fastest of the first, second, and third rotational speeds, the controller 15 can acquire information on the optical parameter at the second earliest time point from the time point at which the optical parameter rises up due to the excitation by the excitation light L1, based on the detection intensity of the probe light L2 transmitted through the sample. At the third rotational speed, which is the slowest of the first, second, and third rotational speeds, the controller 15 can acquire information on the optical parameter at the latest time point from the time point at which the optical parameter rises up due to the excitation by the excitation light L1, based on the detection intensity of the probe light L2 transmitted through the sample.

The controller 15 calculates the optical parameter at each time point based on the detection intensity of the probe light L2 that has passes through the sample at each rotational speed and has been detected by the first detection unit 12b1 at different timings. For example, the controller 15 calculates the optical parameter for each of the three rotational speeds, and hence acquires three values of the optical parameter in total.

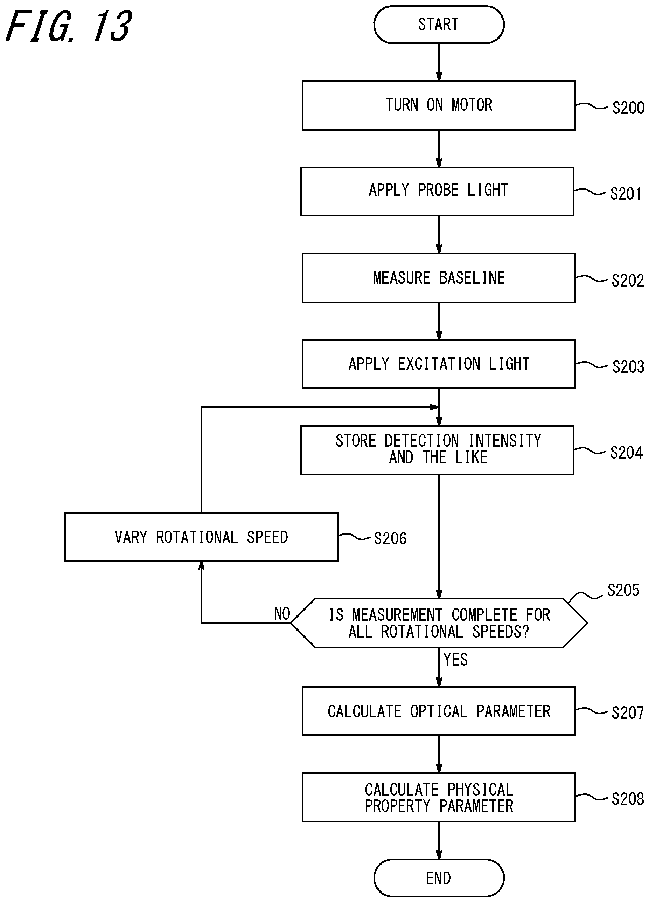

FIG. 13 is a flowchart illustrating an example of the operations of the optical measurement system 1 of FIG. 12. With reference to FIG. 13, a main flow of an optical measurement method using the optical measurement system 1 including the optical measurement apparatus 10 will be described.

In step S200, the control apparatus 30 of the optical measurement system 1 operates the motor 25 of the flow system 20. The control apparatus 30 thereby causes a rotational operation of the sample to be measured, which is present uniformly on the rotating body 24, to start.

In step S201, after the operation of the motor 25 is stabilized in step S200, the controller 15 of the optical measurement apparatus 10 operates the second irradiator 11b to start irradiating the sample with the probe light L2. Step S201 corresponds to the second irradiation step in which the second irradiation area R2, which is located on the movement direction side of the sample than the single first irradiation area R1 on the movement path, is irradiated with the probe light L2. The probe light L2 is continuously applied to the sample, as the continuous light, in subsequent steps.

In step S202, the controller 15 of the optical measurement apparatus 10 measures the transmitted light intensity of the probe light L2 that has been transmitted through the sample in the absence of the excitation light L1 and has been detected by the first detection unit 12b1, as the baseline I₀ as illustrated in FIG. 3. The controller 15 stores information on the measured baseline I₀ in the memory 19.

In step S203, the controller 15 of the optical measurement apparatus 10 operates the first irradiator 11a to start irradiating the sample with the excitation light L1. Step S203 corresponds to the first irradiation step in which the single first irradiation area R1 on the movement path of the moving sample is irradiated with the excitation light L1. The irradiation with the excitation light L1 excites the sample to be measured.

In step S204, the controller 15 of the optical measurement apparatus 10 detects, by the first detection unit 12b1, the probe light L2 that has been transmitted through the sample excited in step S203, and stores the detection intensity of the detected probe light L2 in the memory 19. In addition to such transmitted light intensity of the probe light L2, the controller 15 stores, in the memory 19, additional information such as the rotational speed of the sample on the rotating body 24 and a measurement time. The memory 19 stores the rotational speed of the sample on the rotating body 24, as the information regarding the movement speed. Step S204 corresponds to the detection step in which the probe light L2 applied to the sample in the second irradiation step is detected.

In step S205, the controller 15 of the optical measurement apparatus 10 determines whether the measurement is complete for all the rotational speeds. When it is determined that the measurement is complete for all the rotational speeds, the controller 15 performs the process of step S207. When it is determined that the measurement is not complete for all the rotational speeds, the controller 15 performs the process of step S206.

In step S206, the control apparatus 30 of the optical measurement system 1 varies the rotational speed of the sample on the rotating body 24 by controlling the motor 25 of the flow system 20. For example, the control apparatus 30 sets the rotational speed to a slow value when the measurement starts, and gradually increases the rotational speed as the flow in FIG. 13 is repeated. The sweep of the rotational speed from the slowest value to the fastest value is performed only once.

While the rotational speed is varied in step S206, the controller 15 of the optical measurement apparatus 10 continues to perform the process of storing, in the memory 19, the information on the transmitted light intensity, the rotational speed, the measurement time, and the like in step S204.

In step S207, the controller 15 of the optical measurement apparatus 10 acquires the two-dimensional plot of the optical density calculated from the transmitted light intensity versus time, using the measurement data stored in the memory 19 and the distance along the movement path on the rotating body 24 between the first irradiation area R1 and the second irradiation area R2. Step S207 corresponds to the first calculation step in which the optical parameter at the plurality of time points is calculated, based on the detection intensity of the probe light L2 that has been transmitted through the sample at each of the plurality of time points different from each other in the transient response of the optical parameter of the sample due to the excitation by the excitation light L1 and has been detected at the different timings in the detection step.

In step S208, the controller 15 of the optical measurement apparatus 10 acquires, as the physical property parameter, the time constant that is the lifetime of the excited state, by fitting the optimal function to the two-dimensional plot acquired in step S207. The optimal function includes, for example, the exponential function. Step S208 corresponds to the second calculation step in which the physical property parameter of the sample is calculated based on the optical parameter calculated in the first calculation step.

The controller 15 of the optical measurement apparatus 10 outputs the physical property parameter acquired in step S208, as necessary. For example, the controller 15 may output the physical property parameter as the information to the user from the output interface, including the display, the speaker, and the like, that is additionally provided in the optical measurement apparatus 10. For example, the controller 15 may output the physical property parameter as the information to the user from the output interface, including the display, the speaker, and the like, that is additionally provided in the optical measurement system 1 as the other component different from the optical measurement apparatus 10.

Since the optical measurement system 1 has the rotating body 24 in which the sample is deposited on the substrate and which rotates in the one direction, the optical measurement system 1 can make the sample move in the one direction, without keeping the sample in the movement path that overlaps the first irradiation area R1 and the second irradiation area R2. This enables the optical measurement system 1 to reduce exposure times of the sample in the first irradiation area R1 and the second irradiation area R2. Therefore, the optical measurement system 1 can suppress degradation of the sample to be measured due to light irradiation.

The optical measurement system 1 has the control apparatus 30 and the motor 25 that varies the rotational speed of the rotating body 24 under the control of the control apparatus 30, and therefore enables, using the optical measurement apparatus 10, calculation of the optical parameter and the physical property parameter based on the above sweep of the rotational speed. This allows the optical measurement system 1 to measure the physical property parameter in a short time even for the sample with the long-time physical property parameter.

It is obvious to those skilled in the art that the present disclosure can be realized in predetermined aspects other than the embodiments described above, without departing from the spirit or essential features. Accordingly, the preceding description is illustrative and not limiting. The scope of the disclosure is defined by the appended claims, not by the preceding description. Any modifications, some of which are within the scope of their equivalents, are assumed to be encompassed therein.

For example, the shape, arrangement, orientation, number, and the like of each component described above are not limited to those illustrated in the above description and drawings. The shape, arrangement, orientation, number, and the like of each component may be configured arbitrarily, as long as the function can be realized.

For example, the function or the like included in each step of the optical measurement method described above can be rearranged in a logically consistent manner, and multiple steps can be combined into one or divided.

Although the optical measurement apparatus 10, the optical measurement system 1, and the optical measurement method have been mainly described above, the present disclosure can also be realized as a program executed by processors that the controller 15 and the control apparatus 30 have, or as a storage medium recording the program. It is to be understood that the scope of the present disclosure also includes these.

### REFERENCE SIGNS LIST

- 1: optical measurement system
- 10: optical measurement apparatus
- 11a: first irradiator
- 11b: second irradiator
- 12a: excitation light detection unit
- 12b: detection unit
- 12b1: first detection unit
- 12b2: second detection unit
- 13a: first beam splitter
- 13b: second beam splitter
- 14a: first shutter
- 14b: second shutter
- 15: controller
- 16a: first beam adjuster
- 16b: second beam adjuster
- 17: laser dump
- 18a: focusing lens
- 18b: focusing lens
- 19: memory
- 20: flow system
- 21: pump
- 22: distribution cell
- 23: material tank
- 24: rotating body
- 25: motor
- 30: control apparatus
- 40: mask
- 41a: first slit
- 41b: second slit
- IN: inlet
- OUT: outlet
- L1: excitation light
- L2: probe light
- R1: first irradiation area
- R2: second irradiation area

## Claims

1. An optical measurement apparatus comprising:
a first irradiator configured to irradiate, with excitation light, a single first irradiation area on a movement path of a moving sample;
a second irradiator configured to irradiate, with probe light, a second irradiation area that is located on a movement direction side of the sample than the single first irradiation area on the movement path;
a detection unit configured to detect the probe light with which the second irradiator has irradiated the sample; and
a controller configured to calculate an optical parameter at a plurality of time points, based on detection intensity of the probe light that has been transmitted through the sample at each of the plurality of time points different from each other in a transient response of the optical parameter of the sample due to excitation by the excitation light and has been detected by the detection unit at different timings, and calculate a physical property parameter of the sample based on the calculated optical parameter.

2. The optical measurement apparatus according to claim 1, wherein
the second irradiation area includes a single area,
the detection unit includes a single detector, and
when a movement speed of the sample varies, the controller is configured to calculate the optical parameter for each of a plurality of movement speeds different from each other.

3. The optical measurement apparatus according to claim 1, wherein
the second irradiation area includes a single area,
the detection unit includes a plurality of detectors arranged in an array along the movement path, and
the controller is configured to calculate the optical parameter at the plurality of time points, based on the detection intensity detected by the plurality of detectors different from each other.

4. The optical measurement apparatus according to claim 1, wherein
the second irradiation area includes a plurality of areas,
the detection unit includes a detector corresponding to each of the plurality of areas, and
the controller is configured to calculate the optical parameter at the plurality of time points, based on the detection intensity detected by a plurality of the detectors different from each other.

5. The optical measurement apparatus according to any one of claims 1 to 4, further comprising a memory configured to store detection information from the detection unit and information regarding a movement speed of the sample.

6. An optical measurement system comprising:
the optical measurement apparatus according to any one of claims 1 to 5; and
a flow-type distribution cell in which the sample flows inside a channel in one direction.

7. The optical measurement system according to claim 6, comprising:
a control apparatus configured to control the optical measurement apparatus; and
a pump configured to vary a flow rate of the sample under control of the control apparatus.

8. The optical measurement system according to claim 6 or 7, comprising a mask configured to limit the single first irradiation area and the second irradiation area on the distribution cell.

9. An optical measurement system comprising:
the optical measurement apparatus according to any one of claims 1 to 4; and
a rotating body in which the sample is deposited on a substrate, the rotating body configured to rotate in one direction.

10. The optical measurement system according to claim 9, comprising:
a control apparatus configured to control the optical measurement apparatus; and
a motor configured to vary a rotational speed of the rotating body under control of the control apparatus.

11. An optical measurement method comprising:
irradiating, in a first irradiation step with excitation light, a single first irradiation area on a movement path of a moving sample;
irradiating, in a second irradiation step with probe light, a second irradiation area that is located on a movement direction side of the sample than the single first irradiation area on the movement path;
detecting, in a detection step, the probe light with which the sample has been irradiated in the second irradiation step;
calculating, in a first calculation step, an optical parameter at a plurality of time points, based on detection intensity of the probe light that has been transmitted through the sample at each of the plurality of time points different from each other in a transient response of the optical parameter of the sample due to excitation by the excitation light and has been detected at different timings in the detection step; and
calculating, in a second calculation step, a physical property parameter of the sample based on the optical parameter calculated in the first calculation step.
